# EUROPÄISCHE PATENTSCHRIFT

(11) **EP 2 714 587 B1**
(45) Veröffentlichungstag und Bekanntmachung des Hinweises auf die Patenterteilung: **06.04.2016**
(21) Anmeldenummer: 12723872.3
(22) Anmeldetag: 29.05.2012
(51) Int. Cl.: C01B 17/22

(54) **VERFAHREN ZUR HERSTELLUNG VON LITHIUMSULFID**
PROCESS FOR PREPARING LITHIUM SULFIDE
PROCÉDÉ DE PRODUCTION DE SULFURE DE LITHIUM

(30) Priorität: 27.05.2011 DE 102011076572
(43) Veröffentlichungstag der Anmeldung: 09.04.2014
(73) Patentinhaber: Rockwood Lithium GmbH, 65926 Frankfurt/M (DE)
(72) Erfinder: RITTMEYER, Peter, 65843 Sulzbach/Taunus (DE); WIETELMANN, Ulrich, 61381 Friedrichsdorf (DE); LISCHKA, Uwe, 60437 Frankfurt am Main (DE); HAUK, Dieter, 61169 Friedberg (DE); FÜGER, Bernhard, 60487 Frankfurt am Main (DE); STOLL, Armin, 69502 Hemsbach (DE); DAWIDOWSKI, Dirk, 61169 Friedberg (DE)
(74) Vertreter: Rottmayer, Hans
(86) Internationale Anmeldenummer: PCT/EP2012/060014
(87) Internationale Veröffentlichungsnummer: WO 2012/163900

(56) Entgegenhaltungen:
- EP-A1- 0 802 159
- EP-A1- 1 681 263
- WO-A2-2008/125647
- DE-A1-102007 048 289
- JP-A- 2004 348 973
- US-A- 4 126 666
- US-A1- 2003 031 931

## Beschreibung

Die Erfindung betrifft ein Verfahren zur Herstellung von Lithiumsulfid.

Lithiumsulfid findet aktuell Interesse als Rohstoff für die Synthese von Li-Ionen leitenden Feststoffen (Gläser, Glaskeramiken oder kristalline Produkte wie Li-Argyrodite) oder als Kathodenmaterial in Lithium/Schwefel-Batterien. Lithium/Schwefel-Batterien weisen im Vergleich mit Lithium-Ionen-Batterien eine deutlich höhere Energiedichte und sind somit für eine potentielle Anwendung im Bereich der Elektromobilität von großem Interesse.

In Gmelins Handbuch der anorg. Chemie, Lithium, Ergänzungsband (1969) sind nachfolgende Verfahren zur Herstellung von Lithiumsulfid beschrieben:
- Zusammenreiben von Lithium-Metall und Schwefel;
- Umsetzung von Ammoniumsulfid oder Schwefel mit Lithium-Metall in flüssigem Ammoniak;
- Umsetzung von Lithiumethoxid mit H₂S in Ethanol.

Bei all diesen Verfahren entstehen mehr oder wenige Polysulfid-haltige Produktgemische, die teilweise aufwendig gereinigt werden müssen. So ist es bekannt, Lithiumsulfat mit Kohlenstoff oder Wasserstoff bei Temperaturen von ca. 500°C zu reduzieren. Das Dokument EP 0 802 159 A1 beschreibt die Umsetzung von Lithiumhydroxid mit Schwefelwasserstoff in der Gasphase im Temperaturbereich von 130 bis 445°C. Auch Dokument US 4,126,666 A1 beschreibt eine Umsetzung von Lithiumcarbonat mit Schwefelwasserstoff in der Gasphase im Temperaturbereich von 500 - 700°C.

Aus den Dokumenten US 3,615,191 A1 und US 3,642,436 A1 ist weiterhin die Umsetzung von Lithiummetall oder Lithiumhydrid mit Schwefelwasserstoff in etherischen Lösungsmitteln wie Tetrahydrofuran (THF) bekannt. Bei diesen Reaktionen entsteht ein Gemisch aus Lithiumsulfid (Li₂S) und Lithiumhydrogensulfid (LiSH). Das unerwünschte LiSH kann durch thermische Behandlung bei 180°C - 200°C in Li₂S und Schwefelwasserstoff überführt werden.

Letztlich ist aus Dokument EP 1 460 039 A1 die Umsetzung von Lithiumhydroxid oder Lithiumcarbonat mit Schwefelwasserstoff in n-Methylpyrrolidon als Lösungsmittel bei 130°C zunächst zum LiSH und dann bei 200°C zu Li₂S bekannt. Das Dokument EP 1 681 263 A1 schlägt zur Reinigung Li₂S vor, welches durch die Reaktion von Lithiumhydroxid mit Schwefelwasserstoff in einem aprotischen organischen Lösemittel erhalten wurde, dieses mit einem organischen Lösemittel bei Temperaturen über 100°C zu waschen.

Die Erfindung hat sich die Aufgabe gestellt, ein einfaches Verfahren anzugeben, mit dessen Hilfe Lithiumsulfid in hoher Reinheit unter möglichst ökonomischen, einfachen Reaktionsbedingungen hergestellt werden kann.

Erfindungsgemäß wird die Aufgabe durch ein Verfahren gelöst, bei dem Lithium-haltige starke Basen ausgewählt aus der Gruppe bestehend aus Lithiumalkylen, Lithiumarylen oder Lithiumamiden mit Schwefelwasserstoff in einem aprotischen organischen Lösemittel im Temperaturbereich von -20 bis 120°C unter inerten Bedingungen, vorzugsweise im Temperaturbereich von 0 bis 80°C umgesetzt werden. Unter inerten Bedingungen wird im Sinne der Erfindung das Arbeiten unter Schutzgas zum Ausschluss von Luft und Luftfeuchtigkeit verstanden.

Dazu wird gasförmiger Schwefelwasserstoff in eine Lösung einer Li-haltigen starken Base ausgewählt aus der Gruppe bestehend aus Lithiumalkylen, Lithiumarylen oder Lithiumamiden in einem aprotischen Lösemittel eingeleitet. Die Reaktion setzt spontan bei Raumtemperatur ein und ist exotherm. Das Lithiumsulfid fällt als weißer Feststoff aus und kann nach Beendigung der Reaktion durch Filtration und Trocknung isoliert werden. Die Lithium-haltigen starken Base ausgewählt aus der Gruppe bestehend aus Lithiumalkylen, Lithiumarylen oder Lithiumamiden reagieren gemäß den nachstehenden Gleichungen:

**2 R-Li + H₂S → Li₂S + 2 RH**

**2 R₂N-Li + H₂S → Li₂S + 2 R₂NH**

Das isolierte Material zeigt im Röntgenbeugungsdiagramm nur Linien für das gewünschte Li₂S, Nebenprodukte wie LiSH können nicht nachgewiesen werden.

Vorzugsweise handelt es sich bei den zum Einsatz kommenden starken Li-haltigen Basen um kommerziell erhältliche Stoffe oder Lösungen von Butyllithium oder Hexyllithium in Kohlenwasserstoffen oder Organolithiumamiden vorzugsweise Lithiumdiisopropylamid oder Lithiumhexamethyldisilazid in verschiedenen aprotischen Lösemitteln.

Typische aprotische Lösemittel sind aliphatische und aromatische Kohlenwasserstoffe vorzugsweise Hexan oder Toluol, sowie etherische Lösemittel ausgewählt aus der Gruppe der aliphatischen oder cyclischen Ether vorzugsweise Diethylether, THF oder Gemische aus diesen Lösemitteln.

Die Vorteile des erfindungsgemäßen Verfahrens gegenüber dem Stand der Technik sind somit:
- der Einsatz von kommerziell erhältlichen Ausgangsstoffen;
- die Vermeidung des Arbeitens mit luft- und feuchtigkeitsempfindlichen Feststoffen wie Li-Metall oder LiH;
- die Reaktionsführung bei moderaten Temperaturen, wodurch keine zusätzliche Energie für Heizen oder Kühlen notwendig ist;
- die Isolierung des Produkts durch einfache Verfahren wie Filtration und Trocknung;
- der Erhalt eines phasenreinen Produkts, welches weitergehende Reinigungschritte wie Erhitzen zum Zerstören von LiSH vermeidet.

Die erfindungsgemäß erhaltene Lithiumsufid wird als positive Masse in einem galvanischen Element, für die Synthese von Li-Ionen leitenden Feststoffen insbesondere für die Synthese von Gläsern, Glaskeramiken oder kristallinen Produkten und besonders bevorzugt für die Synthese von Li-Argyrodite verwendet.

### Beispiel 1: Herstellung von Lithiumsulfid aus Schwefelwasserstoff

In einem inertisierten 3I-Planflanschdoppelmantelreaktor mit Temperaturfühler, Gaseinleitungsrohr (Tauchrohr) und Gasableitung (über Gasuhr und Gaswäscher) werden unter Argon-Atmosphäre 1000 g (1449 ml, 3.47 mol, 1.0 eq.) *n*-Butyllithium (2.4 M in Hexan) vorgelegt und anschließend weitere 380 ml Hexan hinzugefügt. Unter Rühren wird die Reaktionslösung auf 10 °C gekühlt. Anschließend werden bei 10 - 15 °C innerhalb von 3 h insgesamt 59 g (38,7 I, 1.73 mol, 0.5 eq.) Schwefelwasserstoff über ein Tauchrohr in die Reaktionslösung geleitet. Dabei kommt es zum Ausfall eines farblosen Feststoffes. Um die Reaktionssuspension rührfähig zu halten, werden insgesamt weitere 550 ml Hexan zugegeben. Nach beendeter Gaseinleitung wird der Reaktorinhalt auf Raumtemperatur (22 °C) erwärmt und weitere 2 h lang gerührt. Anschließend wird die Reaktionssuspension über eine G3-Fritte filtriert und der zurückbleibende farblose Feststoff gründlich mit mehreren Portionen Hexan gewaschen. Der erhaltene Feststoff wird im Hochvakuum bei Raumtemperatur bis zur Gewichtskonstanz getrocknet, anschließend per Pulverdiffraktometrie (XRD) analysiert. Es wurde phasenreines Lithiumsulfid erhalten.

## Patentansprüche

1. Verfahren zur Herstellung von Lithiumsulfid, **dadurch gekennzeichnet, dass** eine Umsetzung von Lithium-haltigen starken Basen ausgewählt aus der Gruppe bestehend aus Lithiumalkylen, Lithiumarylen oder Lithiumamiden mit Schwefelwasserstoff in einem aprotischen organischen Lösemittel im Temperaturbereich von -20 bis 120°C unter inerten Bedingungen vorgenommen wird.

2. Verfahren nach Anspruch 1, **dadurch gekennzeichnet, dass** Butyllithium, Hexyllithium, Lithiumdiisopropylamid oder Lithiumhexamethyldisilazid eingesetzt wird.

3. Verfahren nach Anspruch 1 oder 2, **dadurch gekennzeichnet, dass** als aprotische, organische Lösemittel aliphatische, aromatische Kohlenwasserstoffe oder etherische Lösemittel oder Gemische aus diesen Lösemitteln eingesetzt werden.

4. Verfahren nach Anspruch 3, **dadurch gekennzeichnet, dass** als Lösemittel Hexan, Toluol, Diethylether oder THF eingesetzt wird.

5. Verfahren Anspruch 1 bis 4, **dadurch gekennzeichnet, dass** die Umsetzung im Temperaturbereich von 0 bis 80°C vorgenommen wird.

## Claims

1. A process for preparing lithium sulphide, **characterised in that** a reaction of lithium-containing strong bases selected from the group consisting of lithium alkylene, lithium arylene or lithium amides with hydrogen sulphide is carried out in an aprotic organic solvent in the temperature range from -20 to 120°C under inert conditions.

2. A process according to claim 1, **characterised in that** butyllithium, hexyllithium, lithium diisopropylamide or lithium hexamethyldisilazide is used.

3. A process according to claim 1 or 2, **characterised in that** aliphatic, aromatic hydrocarbons or etheric solvents or mixtures of these solvents are used as the aprotic, organic solvents.

4. A process according to claim 3, **characterised in that** hexane, toluene, diethyl ether or THF is used as the solvent.

5. A process according to claim 1 to 4, **characterised in that** the reaction is carried out in the temperature range from 0 to 80°C.

## Revendications

1. Procédé de préparation de sulfure de lithium, **caractérisé en ce que** l'on procède à une transformation de bases fortes contenant du lithium, sélectionnées dans le groupe comprenant des alkyles de lithium, des aryles de lithium ou des amides de lithium avec du sulfure d'hydrogène dans un solvant organique aprotique, dans la plage de températures allant de -20 à 120 °C, dans des conditions inertes.

2. Procédé selon la revendication 1, **caractérisé en ce que** l'on utilise du butyllithium, de l'hexyllithium, du lithium-diisopropylamide ou du lithium-hexaméthyldisilazide.

3. Procédé selon la revendication 1 ou 2, **caractérisé en ce que** l'on utilise comme solvants organiques aprotiques, des hydrocarbures aromatiques aliphatiques ou des solvants volatils ou des mélanges de ces solvants.

4. Procédé selon la revendication 3, **caractérisé en ce que** l'on utilise comme solvant de l'hexane, du toluène, de l'éther diéthylique ou du THF.

5. Procédé selon les revendications 1 à 4, **caractérisé en ce que** la transformation est réalisée dans la plage de températures allant de 0 à 80 °C.
